**Europäisches Patentamt**

**European Patent Office**

**Office européen des brevets**

(19)

(11) Veröffentlichungsnummer: **0 008 737**
**B1**

(12) # EUROPÄISCHE PATENTSCHRIFT

(45) Veröffentlichungstag der Patentschrift:
15.06.83

(21) Anmeldenummer: 79103053.9

(22) Anmeldetag: 20.08.79

(51) Int. Cl.³: **G 06 F 13/00**, G 06 F 15/20,
**B 41 J 5/46**

(54) **Textbearbeitungseinrichtung.**

(30) Priorität: 31.08.78 DE 2838063

(43) Veröffentlichungstag der Anmeldung:
19.03.80 Patentblatt 80/6

(45) Bekanntmachung des Hinweises auf die Patenterteilung:
15.06.83 Patentblatt 83/24

(84) Benannte Vertragsstaaten:
CH DE FR GB IT NL SE

(73) Patentinhaber: SIEMENS AKTIENGESELLSCHAFT,
Berlin und München Wittelsbacherplatz 2,
D-8000 München 2 (DE)

(72) Erfinder: Hildinger, Eugen, Ahornweg 7, D-8135 Söcking
(DE)

(56) Entgegenhaltungen:
CH-A-472 075
US-A-3 890 601
IBM TECHNICAL DISCLOSURE BULLETIN, Band
17, Nr. 2, Juli 1974, Seiten 570—571, New York,
U.S.A. C. R. ATTNANSIO et al.: »Disk Data
Security«
IBM TECHNICAL DISCLOSURE BULLETIN, Band
16, Nr. 7, Dezember 1973, Seiten 2312—2314, New
York, U.S.A. G. F. NIELSEN: »Remote Terminal —
Computer communication Security System«

SECOND USA-JAPAN COMPUTER CONFE-
RENCE, 26.—28. August 1975, Tokyo, American
Federation of Information Processing Societies
and Information Processing Society of Japan,
Seiten 139—142, Tokyo, JP. F. L. SINDELAR et al.:
»A Two-Level Protection System«

## Textbearbeitungseinrichtung

Die Erfindung bezieht sich auf eine Textbearbeitungseinrichtung entsprechend dem Oberbegriff des Patentanspruches 1.

Bei zu Textbearbeitungseinrichtungen erweiterten Schreibmaschinen werden einmal eingegebene und später oder wiederholt auszugebende bzw. zu überarbeitende Informationen unter Verwendung von Speichervorrichtungen gespeichert. Dazu stehen insbesondere elektronische Speicher oder aber auch Speicher mit magnetischen Speichermedien wie z. B. Magnetband- oder Magnetplattenspeicher zur Verfügung. In diese Speicher können beliebig Informationen eingegeben bzw. eingegebene Informationen beliebig verändert werden. Der Speicherinhalt steht dann jeweils zur Ausgabe durch die Schreibmaschine zur Verfügung.

Es ist bekanntgeworden, anhand von sogenannten Suchbegriffen, die über die Tastatur der Schreibmaschine einzugeben sind, bestimmte Textstellen innerhalb des beschriebenen Speichers aufzusuchen, um ab dieser Stelle den Speicherinhalt zu verändern bzw. den Speicherinhalt auszulesen. Die Verwendung von Suchbegriffen zum Auffinden derartiger Textstellen stellt eine Alternativmaßnahme zu weiteren bekannten Adressiermöglichkeiten dar.

Die bekannten Textbearbeitungseinrichtungen beiten kaum einen brauchbaren Schutz gegenüber unbefugter Abfrage oder insbesondere gegenüber unbefugter Manipulation, d. h. Veränderungen der gespeicherten Information. Auch bei ordnungsgemäß arbeitendem Gerät muß deshalb hohe Sorgfalt auf den Vergleich des ursprünglichen, gewollten Textes mit der endgültigen Reinschrift verwendet werden, um Nachteile aus einer gezielten unberechtigten Manipulation am Speicherinhalt auszuschließen.

Aus der US-PS 3 890 601 ist eine Datenverarbeitungseinrichtung mit einem Plattenspeicher als Speicher mit großer Kapazität und kleiner Zugriffszeit und einem internen Speicher mit verhältnismäßig kleiner Speicherkapazität und kurzer Zugriffszeit bekannt. Für den Zugriff zu dem Plattenspeicher ist es bei dieser bekannten Datenverarbeitungseinrichtung erforderlich, daß eine im internen Speicher gespeicherte Kennung mit einer im Plattenspeicher gespeicherten Kennung übereinstimmt. Nur dann ist ein Zugriff zu den Daten im Plattenspeicher möglich. Bei Nichtübereinstimmung kann mittels einer Tastatur eine neue Kennung in den internen Speicher eingespeichert werden. Eine Änderung der Kennung im Plattenspeicher ist bei dieser bekannten Datenverarbeitungseinrichtung nicht vorgesehen.

Aus der Literaturstelle IBM Technical Disclosure Bull., Band 17, Nr. 2, Juli 1974, Seiten 570 und 571, ist ebenfalls eine Datenverarbeitungseinrichtung mit einem gesicherten Zugriff zu einem Plattenspeicher bekannt. Der Plattenspeicher wird in Untereinheiten aufgeteilt, die mit jeweils einem Benutzer zugeordneten Kennungen versehen sind. Alle vom Plattenspeicher gelesenen Daten werden mit dieser Kennung versehen und eine Übertragung zum Arbeitsspeicher der Datenverarbeitungseinrichtung ist nur dann möglich, wenn die Kennung mit einer dem Benutzer zugeordneten Kennung übereinstimmt. Während bei dieser Datenverarbeitungseinrichtung jedem Benutzer eine Kennung zugeordnet sein muß, ist es bei Textverarbeitungseinrichtungen häufig üblich, daß diese Textverarbeitungseinrichtungen allgemein zugänglich sein sollen. Es soll lediglich sichergestellt werden, daß immer dann, wenn vertrauliche Texte gespeichert sind, diese nicht allgemein zugänglich sind.

Der Erfindung liegt daher die Aufgabe zugrunde, eine Textbearbeitungseinrichtung anzugeben, die einen möglichst weitgehenden Schutz von gespeicherten Informationen immer dann ermöglicht, wenn die Textbearbeitungseinrichtung von verschiedenen Bedienungspersonen benutzt wird, wobei nicht jede Bedienungsperson in der Lage sein soll, alle gespeicherten Informationen abzufragen und zu verändern.

Diese Aufgabe wird erfindungsgemäß durch die im kennzeichnenden Teil des Patentanspruchs 1 angegebenen Merkmale gelöst.

Bei einer nach diesen erfindungsgemäßen Merkmalen ausgestalteten Textbearbeitungseinrichtung sind die Verbindungen zwischen der Schreibmaschine und der Speichervorrichtung für die Informationen ursprünglich durch schaltungstechnische Maßnahmen getrennt. Eine Verbindung dieser beiden Einheiten kann durch eine Bedienungsperson unmittelbar nicht vorgenommen werden. Die Schalteinheiten zum Aufbau der Verbindungen zwischen der Speichervorrichtung und der textbearbeitenden Schreibmaschine sind lediglich durch die erfindungsgemäß angeordnete Vergleichseinrichtung ansteuerbar, und zwar nur dann, wenn durch die Bedienungsperson über die Tastatur der Schreibmaschine eine Kennung eingegeben wird, welche der Kennung entspricht, die der Vergleichseinrichtung vom Speicher zugeführt wird.

Zum Auffinden der die jeweilige Kennung enthaltenen Speicherstelle dient die erfindungsgemäß vorgesehene Ansteuereinheit für die Speichervorrichtung. Da bis zum Vorliegen eines positiven Vergleichsergebnisses zwischen der textbearbeitenden Schreibmaschine und der Speichervorrichtung beide Einheiten voneinander getrennt sind, ist es auch nicht möglich, die gespeicherte Kennung dem Datenspeicher zu entnehmen. Ist an dem für die Kennung vorgesehenen Speicherbereich in der Speichervorrichtung eine Grundkennung eingespeichert, die keine Einschränkung des Zugriffs zum Datenspeicher bezeichnet, so baut die Vergleichseinrichtung entsprechend ohne jegliche Kennungseingabe über die Tastatur eine Verbindung zwischen der Speichervorrichtung und der textbearbeitenden Schreibmaschine auf.

Nach einer bevorzugten Ausgestaltung ist die erfindungsgemäße Textbearbeitungseinrichtung dadurch gekennzeichnet, daß eine handbetätigbare Schaltereinheit für die Ansteuereinheit zum Auffinden des Kennungsbereiches und zum Abschalten des Druckwerks vorgesehen ist. Unter Zuhilfenahme dieser Elemente ist es möglich, dem für die Kennung vorgesehenen Kennungsbereich eine neue Kennung einzugeben, ohne daß diese Kennung nach außen sich auswirkt. Damit ist lediglich die Eingabeperson in der Lage, in den derart gesicherten Datenspeicher einzugreifen. Besteht jedoch der Wunsch, die im Datenspeicher enthaltene Kennung auch auf dem ursprünglich geschriebenen Konzept aufzuzeichnen, so ist zu diesem Zweck die erfindungsgemäße Textbearbeitungseinrichtung dadurch gekennzeichnet, daß ein handbetätigbarer Überbrückungsschalter parallel zu der das Druckwerk abtrennenden Schaltereinheit angeordnet ist.

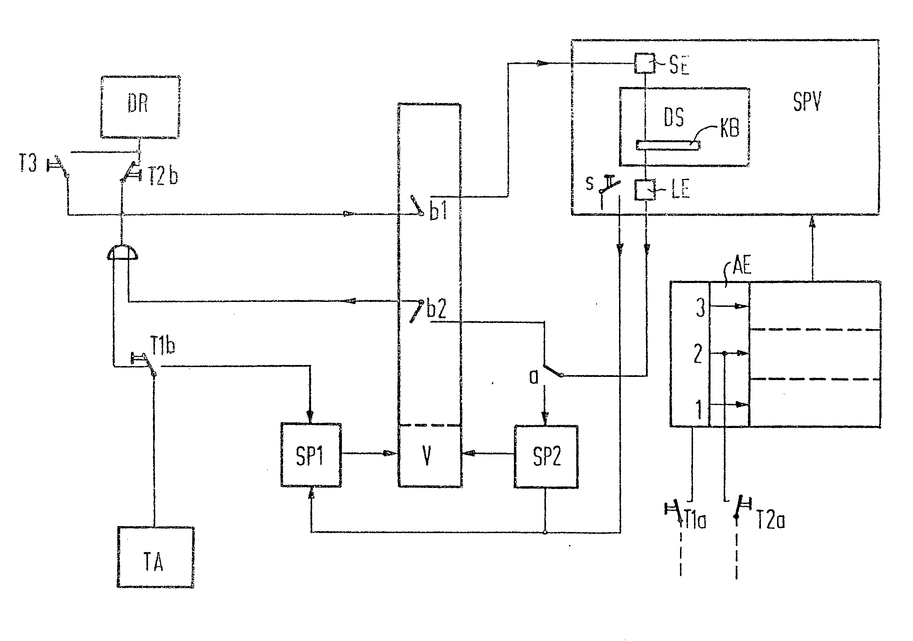

Anhand der Zeichnung ist ein nach den Merkmalen der Erfindung ausgestaltetes Ausführungsbeispiel im folgenden näher beschrieben.

Die Figur zeigt eine schematisierte Darstellung der zum Verständnis der Erfindung wesentlichen Baueinheiten.

Wesentliche Bestandteile der Schreibmaschine, die im Rahmen einer Textbearbeitungseinrichtung zum Einsatz gebracht werden sollen, sind die Tastatur TA und das Druckwerk DR. Für die Abspeicherung von über die Tastatur TA eingegebenen Informationen ist eine Speichervorrichtung SPV mit einem Datenspeicher DS angeordnet. Die Speichervorrichtung SPV enthält eine Schreibeinrichtung SE und eine Leseeinrichtung LE für den Datenspeicher DS, welche über Schalteinheiten b1 bzw. b2 mit der Funktionsverbindungsstrecke zwischen der Tastatur TA und dem Druckwerk DR der Schreibmaschine koppelbar sind.

Die Schalteinheiten b1 und b2 sind lediglich geschlossen, wenn eine Vergleichseinrichtung V ein entsprechendes Steuersignal abgibt. Dieses Steuersignal wird von der Vergleichsschaltung erzeugt, wenn an den Eingängen der Vergleichsschaltung V durch die Speicherbausteine SP1 und SP2 gleiche Kennungen anliegen. Der Speicherbaustein SP1 ist der Tastatur TA und der Speicherbaustein SP2 der Speichervorrichtung SPV zugeordnet.

Der Datenspeicher DS enthält einen Kennungsbereich KB. Der Inhalt dieses Kennungsbereichs KB muß vor der Benutzbarkeit der Speichervorrichtung SPV für die Textbearbeitungseinrichtung in den Speicherbaustein SP2 übernommen werden. Dazu dient eine Ansteuereinheit AE, welche über eine von Hand betätigbare Taste T1a aktivierbar ist. Durch diese Ansteuereinheit AE wird die Speichervorrichtung SPV veranlaßt, in einer ersten Schaltstufe den Datenspeicher DS in die Speichervorrichtung SPV einzuziehen, in einer zweiten Schaltstufe den Kennungsbereich KB im Datenspeicher DS durch die Leseeinheit LE anzusteuern und in einer dritten Schaltstufe die im Kennungsbereich enthaltene Kennung auszulesen.

Befindet sich die Leseeinheit LE der Speichervorrichtung SPV im Kennungsbereich KB des Datenspeichers DS, so ist gesteuert durch die Speichervorrichtung SPV ein Umschalter a des Ausgangs der Leseeinheit LE auf den Eingang des Speicherbausteines SP2 gelegt, so daß die im Datenspeicher DS enthaltene Kennung in den Speicherbaustein SP2 während der dritten Schaltstufe der Ansteuereinheit AE übernommen wird. Anschließend wird über die Tastatur TA und den entsprechend umgelegten Schalter T1b die Kennung von der Bedienungsperson in den Speicherbaustein SP1 eingegeben.

Bei Gleichheit dieser beiden Kennungen in den Speicherbaustein SP1 und SP2 wird durch die Vergleichsschaltung V die Verbindung zwischen der Schreibmaschine und der Speichervorrichtung SPV über die Schalteinheiten b1 und b2 hergestellt. Ist im Datenspeicher DS kein Kennungswert enthalten, so braucht auch über die Tastatur kein Kennungswert eingegeben werden und die Vergleichsschaltung stellt über die Schalteinheiten b1 und b2 die Verbindung her.

Soll eine neue Kennung über die Tastatur in den Kennungsbereich KB des Datenspeichers DS eingegeben werden, so muß als Voraussetzung der Vergleicher V mit seinen Schalteinheiten b1 und b2 zuvor eine Verbindung zwischen der Schreibmaschine und der Speichervorrichtung SPV hergestellt haben. Durch Betätigung einer Schaltereinheit T2a in Verbindung mit T2b wird die Speichervorrichtung SPV veranlaßt, die Schreibsteuerung SE auf den Kennungsbereich KB des Datenspeichers DS einzustellen, und die Verbindung von der Tastatur TA zum Druckwerk DR wird unterbrochen. Über die Tastatur TA kann nunmehr die neue Kennung in den Datenspeicher DS eingegeben werden, ohne daß ein Ausdruck über das Druckwerk DR erfolgt. Soll dennoch gezielt ein Ausdruck der Kennung über das Druckwerk DR erfolgen, so ist ein Überbrückungsschalter T3 zu betätigen, welcher parallel zur Strecke der Schalteinheit T2b angeordnet ist.

Nach Beendigung des Textbearbeitungsvorgangs, insbesondere bei Entnahme des Datenspeichers DS aus der Speichervorrichtung SPV werden über einen Schaltkontakt s die beiden Speicherbausteine SP1 und SP2 wieder gelöscht.

## Patentansprüche

1. Textbearbeitungseinrichtung unter Verwendung einer Schreibmaschine mit einer Tastatur (TA), einem Druckwerk (DR) und einer Speichervorrichtung (SPV), die einen entnehmbaren Datenspeicher (DS) enthält, in dem durch die Tastatur (TA) eingegebene Informationen und Kennungen speicherbar und überarbeitbar sind, und die in Abhängigkeit vom Vergleich einer gespeicherten Kennung mit einer über die Tastatur (TA) eingegebenen Kennung die Überarbeitung oder den Abdruck der gespeicherten Informationen über das Druckwerk (DR) der Schreibmaschine steuert, dadurch gekennzeichnet, daß ein Umschalter (a) vorgesehen ist, der gesteuert durch die Speichervorrichtung (SPV) beim Lesen der gespeicherten Kennung aus einem über eine Ansteuereinheit (AE) ansteuerbaren Kennungsbereich (KB) des Datenspeichers (DS) die Kennung einem Speicherbaustein (SP2) zuführt und beim Lesen der übrigen gespeicherten Informationen aus dem Datenspeicher (DS) diese dem Druckwerk (DR) über eine erste Schalteinheit (b2) zuführt und daß eine Vergleichseinrichtung (V) vorgesehen ist, die bei Gleichheit der dem Speicherbaustein (SP2) zugeführten Kennung mit der mittels der Tastatur (TA) eingegebenen Kennung den Übertragungsweg für die gespeicherten Informationen über die erste Schalteinheit (b2) zum Druckwerk (DR) durchschaltet und/oder über eine zweite Schalteinheit (b1) die Speicherung einer mittels der Tastatur (TA) eingegebenen Kennung in dem Kennungsbereich (KB) ermöglicht.

2. Textbearbeitungseinrichtung nach Anspruch 1, dadurch gekennzeichnet, daß eine handbetätigbare Schaltereinheit (T2a, T2b) für die Ansteuereinheit (AE) zum Auffinden des Kennungsbereichs (KB) und zum Abschalten des Druckwerks (DR) vorgesehen ist.

3. Textbearbeitungseinrichtung nach Anspruch 2, dadurch gekennzeichnet, daß ein handbetätigbarer Überbrückungsschalter (T3) parallel zu der das Druckwerk (DR) abtrennnenden Schaltereinheit (T2b) angeordnet ist.

## Claims

1. Text processing device employing a typewriter comprising a keyboard (TA), a printing unit (DR) and a storage device (DS) which includes a removable data store (DS) in which information and identifications input by means of the keyboard (TA) can be stored and processed, and which storage device, in dependence upon the comparison of a stored identification with an identification stored via the keyboard (TA), controls the processing or the printing of the stored information by means of the printing unit (DR) of the typewriter, characterised in that there is provided a change-over switch (A) which — being controlled by the storage device (SPV) — when reading the stored identification from an identification region (KB) of the data store, which region can be driven by means of a drive unit (AE), feeds the identification to a storage module (SP2) and when reading the remaining stored information from the data store (DS), feeds said information to the printing unit (DR) via a first switching unit (b2), and that there is provided a comparison device (V) which, when the identification fed to the storage module (SP2) corresponds to the identification input by means of the keyboard (TA), switches through the transmission path for the stored information to the printing unit (DR) via the first switching unit (b2) and/or enables the storage of an identification, which is input by means of the keyboard (TA), in the identification region via a second switching unit (b1).

2. Text processing device as claimed in claim 1, characterised in that a manually operable switch unit (T2a, T2b) for the drive unit (AE) is provided in order to locate the identification region (KB) and in order to switch-off the printing unit (DR).

3. Text processing device as claimed in claim 2, characterised in that a manually operable bridging switch (T3) is arranged parallel to the switch unit (T2b) isolating the printing unit (DR).

## Revendications

1. Dispositif pour le traitement des textes avec mise en oeuvre d'une machine à écrire avec un clavier (TA), un mécanisme d'impression (DR), un dispositif à mémoire (SPV) qui comporte une mémoire de données amovible (DS) dans laquelle des informations et des indicatifs introduits par le clavier sont susceptibles d'être mémorisés et corrigés, et qui, en fonction de la comparaison entre un indicatif mémorisé et un indicatif introduit par l'intermédiaire du clavier (TA), commande la correction ou l'impression des informations mémorisées par l'intermédiaire du mécanisme d'impression (DR) de la machine à écrire, caractérisé par le fait qu'il est prévu un commutateur (a) qui, commandé par le dispositif à mémoire (SPV), applique l'indicatif à un module de mémoire (SP2) dans le cas de la lecture de l'indicatif mémorisé à partir d'une zone d'indicatifs (KB) de la mémoire de données (DS), susceptible d'être attaquée à l'aide d'une unité d'attaque (AE) et à la lecture de la mémoire de données (DS) des autres informations mémorisées applique ces dernières au mécanisme d'impression (DR) par l'intermédiaire d'une première unité de commutation (b2), et qu'il est prévu un comparateur (V) qui, en cas d'égalité entre l'indicatif appliqué au module de mémoire (SP2) et l'indicatif introduit à l'aide du clavier (TA), établi par l'intermédiaire de la première unité de commutation (b2), la voie de transmission, vers le mécanisme d'impression pour les informations mémorisées et/ou autorise, par l'intermédiaire d'une seconde unité de commutation (b1), la mémorisation dans la zone d'indicatifs (KB) d'un indicatif introduit à l'aide du clavier (TA).

2. Dispositif pour le traitement des textes selon la revendication 1, caractérisé par le fait qu'il est prévu une unité de commutation (T2a, T2b) susceptible d'être commandée à la main pour l'unité d'attaque (AE) pour la recherche de la zone d'indicatifs (KB) et pour le débranchement du mécanisme d'impression (DR).

3. Dispositif pour le traitement des textes selon la revendication 2, caractérisé par le fait qu'un commutateur de pontage (T3), susceptible d'être commandé à la main, est disposé en parallèle sur l'unité de commutation (T2b) qui isole le mécanisme d'impression (DR).